# EUROPEAN PATENT APPLICATION

(11) **EP 3 920 045 A2**
(43) Date of publication of application: **08.12.2021**
(21) Application number: 21201038.3
(22) Date of filing: 05.10.2021
(51) Int. Cl.: G06F 16/38, G06N 20/00, G06Q 50/10

(54) **INFORMATION SEARCHING METHOD, APPARATUS, STORAGE MEDIUM, AND PROGRAM PRODUCT**

(30) Priority: 30.10.2020 CN 202011191687
(71) Applicant: Beijing Baidu Netcom Science and Technology Co., Ltd., Beijing 100085 (CN)
(72) Inventor: Wang, Qian, Beijing, 100085 (CN); Wang, Haiwei, Beijing, 100085 (CN); Wang, Jie, Beijing, 100085 (CN); Liu, Zhun, Beijing, 100085 (CN); He, Wei, Beijing, 100085 (CN)
(74) Representative: Feller, Frank

(57) **Abstract**

An information searching method, an apparatus, a storage medium and a computer program product are provided, which are related to the field of deep learning and the like. The method includes: acquiring K related second-type-entity corresponding to a target first-type-entity from a relational map based on a search word related to the target first-type-entity; wherein K is an integer greater than or equal to 1; selecting M candidate second-type-entity from the K related second-type-entity based on data representing a relation between the K related second-type-entity and the target first-type-entity; wherein M is an integer greater than or equal to 1 and less than or equal to K; selecting N target second-type-entity from the M candidate second-type-entity as a search result; wherein N is an integer greater than or equal to 1 and less than or equal to M.

## Description

### TECHNICAL FIELD

The present disclosure relates to the technical field of computers, and particularly to the field of deep learning.

### BACKGROUND

Large enterprises all involve cross-department and cross-team collaboration and communication to maximize their value in their respective positions. For traditional enterprises, the manner to determine a related second-type-entity through a first-type-entity, such as the first-type-entity is an event, the second-type-entity is a person, that is, the manner to determine a related person through an event is mainly performed offline, such as through communication, inquiry and the like. However, the above manner cannot guarantee the searching efficiency and accuracy of searching for a second-type-entity through a first-type-entity.

### SUMMARY

The present disclosure provides an information searching method, apparatus, electronic device and storage medium.

According to one aspect of the disclosure, an information researching method is provided, including:
acquiring K related second-type-entity corresponding to a target first-type-entity from a relational map based on a search word related to the target first-type-entity; wherein K is an integer greater than or equal to 1;
selecting M candidate second-type-entity from the K related second-type-entity based on data representing a relation between the K related second-type-entity and the target first-type-entity; wherein M is an integer greater than or equal to 1 and less than or equal to K;
selecting N target second-type-entity from the M candidate second-type-entity as a search result; wherein N is an integer greater than or equal to 1 and less than or equal to M.

According to a second aspect of the present disclosure, an information searching apparatus is provided, including:
an extraction module configured for acquiring K related second-type-entity corresponding to a target first-type-entity from a relational map based on a search word related to the target first-type-entity; wherein K is an integer greater than or equal to 1;
a filtering module configured for selecting M candidate second-type-entity from the K related second-type-entity based on data representing a relation between the K related second-type-entity and the target first-type-entity; wherein M is an integer greater than or equal to 1 and less than or equal to K;
a search result determination module configured for selecting N target second-type-entity from the M candidate second-type-entity as a search result; wherein N is an integer greater than or equal to 1 and less than or equal to M.

According to the third aspect of the present disclosure, an electronic device is provided, including:
at least one processor; and
a memory communicatively connected to the at least one processor; wherein,
the memory stores instructions executable by the at least one processor, and the instructions are executed by the at least one processor to enable the at least one processor to perform the above method.

According to the fourth aspect of the present disclosure, there is provided a non-transitory computer-readable storage medium storing computer instructions, wherein the computer instructions are executed by a computer to enable the computer to perform the above method.

By adopting the present disclosure, the related second-type-entity corresponding to the target first-type-entity can be determined according to the relational map, the candidate second-type-entity are screened from the related second-type-entity, and finally the target second-type-entity are determined from the candidate second-type-entity to serve as a search result. Therefore, the target second-type-entity can be determined only through the pre-constructed relational map in combination with the related search word, the searching efficiency and the accuracy are improved, and the office efficiency of enterprises can be improved.

It is to be understood that the description in this section is not intended to identify key or critical features of the embodiments of the present disclosure, nor is it intended to limit the scope of the disclosure. Other features of the present disclosure will become readily apparent from the following description.

### BRIEF DESCRIPTION OF THE DRAWINGS

The drawings are used to better understand the present solution and do not constitute a limitation to the present disclosure, in which:
FIG. 1 is a schematic flowchart I illustrating an information searching method according to an embodiment of the present disclosure;
FIG. 2 is a schematic diagram of a relational map of entity-relationship model according to an embodiment of the present disclosure;
FIG. 3 is a schematic flowchart II illustrating an information searching method according to an embodiment of the present disclosure;
FIG. 4 is a schematic structural diagram I illustrating an information searching apparatus according to an embodiment of the present disclosure;
FIG. 5 is a schematic structural diagram II illustrating an information searching apparatus according to an embodiment of the present disclosure;
FIG. 6 is a block diagram of an electronic device for implementing an information searching method according to an embodiment of the present disclosure.

### DETAILED DESCRIPTION

The following describes exemplary embodiments of the present disclosure with reference to the accompanying drawings, which include various details of the embodiments of the present disclosure to facilitate understanding, and should be considered as merely exemplary. Accordingly, one of ordinary skills in the art appreciates that various changes and modifications can be made to the embodiments described herein without departing from the scope and spirit of the present disclosure. Similarly, descriptions of well-known functions and structures are omitted from the following description for clarity and conciseness.

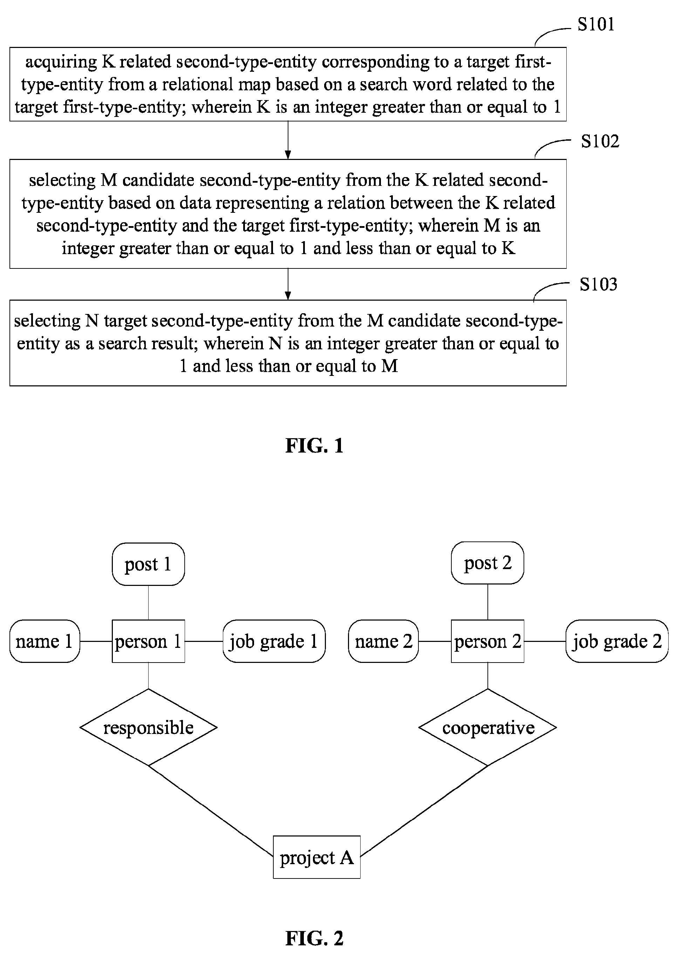

An embodiment of the disclosure provides an information searching method, as shown in FIG.1, including:
S101: acquiring K related second-type-entity corresponding to a target first-type-entity from a relational map based on a search word related to the target first-type-entity; wherein K is an integer greater than or equal to 1;
S102: selecting M candidate second-type-entity from the K related second-type-entity based on data representing a relation between the K related second-type-entity and the target first-type-entity; wherein M is an integer greater than or equal to 1 and less than or equal to K;
S103: selecting N target second-type-entity from the M candidate second-type-entity as a search result; wherein N is an integer greater than or equal to 1 and less than or equal to M.

The embodiment is applicable to an electronic device which may be a terminal device with a search function, such as a personal computer, a mobile phone, a tablet computer and the like.

The relational map describes a knowledge resource and a carrier thereof by using a visualization technology, and mining, analyzing, constructing, drawing and displaying a mutual relation among knowledge and various entities or data objects. The relational map may be referred to as another name in an enterprise or institution, such as an enterprise-level intelligent office relational map. The relational map includes a first-type-entity and a second-type-entity, wherein the second-type-entity may specifically be a human entity, and the first-type-entity may specifically be an event entity. The first-type-entity may be a project, a platform, a departments, etc. The second-type-entity, i.e., a human entity, may include a person's name, post, job grade, etc. In addition, there is a relationship between the first-type-entity and the second-type-entity, namely, a relationship between a human entity and an event entity. The relationship between the second-type-entity and the first-type-entity may be responsible relationship, cooperative relationship, participating relationship, etc., which is not limited herein.

An exemplary relational map is illustrated with reference to Fig. 2, in which a first-type-entity may be project A and there are two second-type-entities, which are person 1 and person 2, respectively. The relationship between the first-type-entity and the second-type-entity may be responsible relationship and cooperative relationship, respectively. For example, the relationship between project A and person 1 is the responsible relationship and the relationship between project A and person 2 is the cooperative relationship in Fig. 2. In addition, the second-type-entity may also have own attribute information, for example, the attribute information of the person 1 in Fig. 2 may include: name 1, job grade 1 and post 1. Of course, although not shown, the first-type-entity may have its own attribute information, such as a name of project A, a department name, etc..

The search word related to the target first-type-entity may be a search word input based on an operation interface of the electronic device, and the specific input mode is not limited herein.

The search word associated with the target first-type-entity may be one or more fields associated with the target first-type-entity. Specifically, the search word associated with the target first-type-entity may be a project name of a project, a team name of a product team, or a platform model of a product, not exhaustive here. For example, assuming that the target first-type-entity is "project A", i.e., it is desired to determine the person in charge of a project of "project A" in the company, the search may be performed by using the relational map with the relevant information of "project A" as a search word of the first-type-entity, such as the entity name of "project A", and/or the publication time information of project A, etc.

After a search word related to a target first-type-entity is acquired, the target first-type-entity can be determined based on the search word related to the target first-type-entity and the relational map; and K related second-type-entity related to the target first-type-entity is determined based on the target first-type-entity and the relational map.

The target first-type-entity may be any one of a plurality of first-type-entities in the relational map; and the K related second-type-entity may refer to one or more second-type-entities of a plurality of second-type-entities in the relational map, wherein the number of the one or more second-type-entities is K.

The K related second-type-entity may further include attribute information of each related second-type-entity. For example, the second-type-entity is a person entity, and attribute of the person entity may include name information, department information, job grade, of the person, etc.

The value of K may be set systematically as desired, may be 100 or 50, and is not intended to be exhaustive.

In addition, the above process of acquiring the K related second-type-entity corresponding to the target first-type-entity from the relational map based on the search word related to the target first-type-entity may also include: acquiring related second-type-entities corresponding to the target first-type-entity from the relational map based on the search word related to the target first-type-entity; performing merging and de-duplication operation on the related second-type-entities to obtain the K related second-type-entity. Here, the merging and de-duplication operation may specifically refer to merging the same related second-type-entities, so that K related second-type-entity which are different from each other can be finally obtained.

The data representing a relation between each of the K related second-type-entity and the target first-type-entity may include: confidence, relationship type, relationship setup time, etc. Correspondingly, selecting M candidate second-type-entity from the K related second-type-entity based on the data representing the relation between the K related second-type-entity and the target first-type-entity may include screening the K related second-type-entity based on a confidence degree in the data representing the relation to obtain the M candidate second-type-entity, wherein M can be set according to actual situations, as long as it is not greater than K. For example, K may be 10 and M may be 5.

It should be noted that, in addition to the above confidence, M candidate second-type-entity may be selected based on the relationship type, relationship establishment time, etc. in the data representing relations, e.g., the relationship type of a candidate second-type-entity may be one of predetermined relationship types, and/or the relationship establishment time of a candidate second-type-entity may be within a predetermined time range, etc., which is not exhaustive.

Selecting N target second-type-entity from the M candidate second-type-entity as a search result may include: selecting N target second-type-entity, in which the confidence degree between the N target second-type-entity and the target first-type-entity is the highest, from the M candidate second-type-entity as the search result; or, randomly selecting N target second-type-entity as the search result.

It is to be understood that N and M may be the same or different. In a case where N and M are the same, it is equivalent to taking all the M candidate second-type-entity as the target second-type-entity. In a case where N is different from M, N needs to be smaller than M, i.e., a part is filtered out from the M candidate second-type-entity, and only N target second-type-entity is reserved.

The particular value of N may be set according to the actual situation, and in one example, N may be 10, although it may be larger or smaller in actual processing, which is not limited herein.

It is to be noted that since attribute information (or related information) corresponding to each entity is preset in the relational map, the finally obtained search result may include N target second-type-entity and attribute information of each target second-type-entity in the N target second-type-entity. For example, if a target second-type-entity is an employee in the enterprise, the final search result may include N employees and attribute information of each of the N employees, such as the name, contact information, responsibility or the like.

Therefore, the related second-type-entity corresponding to the target first-type-entity can be determined through the relational map, the candidate second-type-entity is screened from the related second-type-entity, and finally the target second-type-entity is determined from the candidate second-type-entity to serve as the search result. Therefore, the target second-type-entity related to the target first-type-entity is determined through the relational map, so that the problems of low efficiency, deviation of results and the like caused by offline inquiry and the like can be avoided. According to the technical solution provided by the present embodiment, the target second-type-entity can be determined only through the pre-constructed relational map in combination with the related search word, the searching efficiency and the accuracy are substantially improved, and the office efficiency of enterprises can be improved.

In the above step S102, selecting M candidate second-type-entity from the K related second-type-entity based on the data representing the relation between the K related second-type-entity and the target first-type-entity, includes: acquiring, based on a confidence degree between the K related second-type-entity and the target first-type-entity, a related second-type-entity meeting a confidence condition from the K related second-type-entity, adding the related second-type-entity meeting the confidence condition to a candidate set; and determining the M candidate second-type-entity based on the candidate set.

The confidence degree between the K related second-type-entity and the target first-type-entity may be the content contained in the data representing the relation between the first-type-entity and the related second-type-entity in the relational map. The data representing the relation between the K related second-type-entity and the target first-type-entity in the relational map can be obtained simultaneously as the K related second-type-entity is obtained from the relational map.

In constructing the relational map, confidence degrees of data representing relations between respective entities are calculated and added to the relational map. For example, every time a first-type-entity or a second-type-entity is added in the relational map, data representing a relation between the newly added first-type-entity or the newly added second-type-entity and other entities can be generated. The data representing a relation between the entities may include data representing a relation between a first-type-entity and another first-type-entity, between a second-type-entity and another second-type-entity, and between a first-type-entity and a second-type-entity. The present embodiment mainly relates to the data representing relations between first-type-entities and second-type-entities. Further, a confidence degree is included in the data representing a relation between a first-type-entity and a second-type-entity. The confidence degree can be used to characterize the level of correlation between two entities statistically. By adding the confidence degree in the data representing the relation between the first-type-entity and the second-type-entity, the relationship compactness degree between different entities can be quantified.

In addition, in the relational map, the confidence degree between one first-type-entity and a different second-type-entity may be different. For example, in a project (the first-type-entity A), the confidence degree between the project name and project leader (the second-type-entity 1) is 0.95; the average confidence degree between the project name and the project participants (the second-type-entity 2) is 0.91; the average confidence degree between the project name and the project interface people (the second-type-entity 3) is 0.88; and the average confidence degree between the project name and the project coordinators (the second-type-entity 4) is 0.82.

The confidence condition may be greater than a preset confidence degree, which may be 0.90. The higher the confidence condition is set, the fewer the candidate second-type-entities are obtained, so that the search range can be reduced, but the target second-type-entity can be mistakenly excluded. On the contrary, the lower the confidence condition is set, the more the candidate second-type-entities can be obtained, and thus the obtained search range is larger.

In this way, related second-type-entity meeting the confidence condition can be acquired from the K related second-type-entity based on the confidence degree between the K related second-type-entity and the target first-type-entity, so that candidate second-type-entity can be screened from a large number of related second-type-entities to form a candidate set, and the range of subsequent screening for target second-type-entity can be reduced to improve the processing efficiency. Moreover, due to the fact that the candidate second-type-entities with higher confidence degrees are reserved, the subsequent screening of the target second-type-entity can be more accurate.

After the related second-type-entities meeting the confidence condition are added to the candidate set, the M candidate second-type-entity is determined based on the candidate set, and the following two processing modes can be used.

Mode I, all relevant second-type-entities contained in the candidate set are served as candidate second-type-entities, namely there are M candidate second-type-entities.

Mode II, M candidate second-type-entity is further screened from related second-type-entities contained in the candidate set, which specifically includes:

filtering related second-type-entities contained in the candidate set based on at least one of the relationship type condition and the preset time condition to obtain the M candidate second-type-entity.

The value of M may be set systematically as desired, e.g., M = 40, 30, etc., which is not intended to be exhaustive.

The related second-type-entities in the above candidate set are the result of comprehensive calculation based on confidence parameters. But in practical applications, it is often necessary to focus on the conditions of some specific dimensions, such as a relationship type dimension, a time dimension, a platform dimension, etc.

The data representing a relation between a related second-type-entity and the target first-type-entity may include: confidence degree, relationship type, relationship setup time, etc.

The candidate set has been determined based on the confidence degree, wherein the related second-type-entities in the candidate set may be further filtered based on the relationship type and/or the relationship setup time in the data representing the relation, one or more related second-type-entities that do not meet at least one of the relationship type condition and the preset time condition are deleted, and the related second-type-entities remaining in the candidate set are used as the M candidate second-type-entity.

The relationship type condition may include: reserving a second-type-entity that conforms the preset relationship type, and deleting a second-type-entity that does not conform the preset relationship type.

The preset time condition may include: reserving a second-type-entity in which the relationship setup time between the second-type-entity and the target first-type-entity is within a preset time range; and/or reserving at least one second-type-entity having the closest relationship setup time among second-type-entities having the same relationship type with the target first-type-entity.

For example, it is supposed that the relevant second-type-entity is person C and the target first-type-entity is project A. The relationship type of the person C in the project A led by another department is the cooperator, but the job grade of person C is very high. After comprehensive calculation, the confidence degree between the person C and the project A is 0.93, which meets the confidence condition that the confidence degree is greater than or equal to 0.90, and thus the person C is included in the candidate set. Considering that in a scenario of looking for a person cross-department within an enterprise, cooperators are only shown in fewer cases, for example, a joint project will retain cooperators based on special reasons only in a few cases, and cooperators in a candidate set may need to be filtered, and a related second-type-entity (person) with a relationship type of cooperator can be set to be deleted in the above-mentioned relationship type condition. Optionally, the relationship type condition may also set to delete a related second-type-entity with the relationship type corresponding to a cooperator or an interface person, which is not intended to be exhaustive.

As another example, data of a candidate set may need to be filtered from the time dimension in view of the presence of handover in some projects. It is supposed that the related second-type-entities include a person D and a person E, and the target first-type-entity is a project A. As for the project A, the person in charge is changed from person D to person E, and person D is no longer responsible for the project. However, after comprehensive calculation based on confidence degree, person D and person E are likely to have close confidence degrees, so they are both included in the candidate set. At the moment, a preset time condition is set such that for second-type-entities having the same relationship type with the target first-type-entity, one second-type-entity with the latest relationship setup time is reserved, and other second-type-entities are deleted, and thus a latest related second-type-entity is reserved as a candidate second-type-entity.

Alternatively, adopting both the relationship type condition and the preset time condition as the filtering condition for filtering, or using only one of the two conditions are all within the scope of protection of this embodiment and which is not exhaustive.

Therefore, based on the candidate set, the related second-type-entities in the candidate set can be further filtered according to the relationship type and/or the time dimension to finally obtain M candidate second-type-entity, and thus some related second-type-entities having lower association degrees with the target first-type-entity are filtered out, so that the accuracy of searching for the target second-type-entity is further improved.

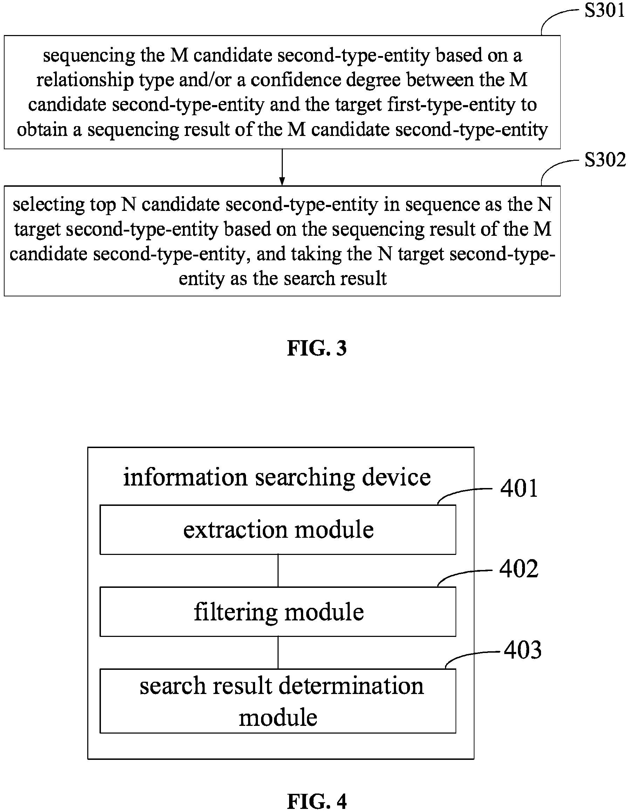

After the M candidate second-type-entity is obtained by performing the above steps, step S103 is performed, and N target second-type-entity is selected from the M candidate second-type-entity as a search result; wherein N is an integer greater than or equal to 1 and less than or equal to M. As shown in Fig. 3, step S103 specifically includes:
S301: sequencing the M candidate second-type-entity based on a relationship type and/or a confidence degree between the M candidate second-type-entity and the target first-type-entity to obtain a sequencing result of the M candidate second-type-entity;
S302: selecting top N candidate second-type-entity in sequence as the N target second-type-entity based on the sequencing result of the M candidate second-type-entity, and taking the N target second-type-entity as the search result.
S301 may include performing sequencing based on at least one of relationship type and confidence degree in the data representing the relation between the M candidate second-type-entity and the target first-type-entity, which is described respectively as follows.

Case 1, the M candidate second-type-entity is sequenced based on the relationship type in the data representing the relation between the M candidate second-type-entity and the target first-type-entity. It is assumed that M = 30, i.e., there may be 30 candidate second-type-entities, and it is assumed that the second-type-entities are people, which may include 1 project leader, 12 project participants and 17 project interface people. The sequencing is performed based on the relationship type, and 12 project participants and 17 project interface people may be randomly sequenced internally.

Case 2, the M candidate second-type-entity is sequenced based on the confidence degree. It is also assumed that M = 30, and thus 30 candidate second-type-entities are sequenced in order of confidence degree. Entities with the same confidence degree may be randomly sequenced.

Case 3, M candidate second-type-entity may be sequenced based on both relationship type and confidence degree. Moreover, it can be systematically set that sequencing is performed based on the relationship types preferentially, and the objects with the same relationship type are sequenced according to the confidence degrees. Alternatively, sequencing is performed based on the confidence degrees preferentially, wherein objects with the same confidence degree are sequenced according to the relationship types.

After the candidate second-type-entities are sequenced, the top N candidate second-type-entities can be selected as target second-type-entities, and N target second-type-entities are served as a final search result. The value of N may be 10, may be 5, and is not exhaustive.

Therefore, by sequencing the candidate second-type-entities according to the relationship type, the confidence degree or the combination of the relationship type and the confidence degree, the candidate second-type-entities can be arranged in sequence more accurately, and the accuracy and the efficiency of information searching can be further improved.

In one example, sequencing the M candidate second-type-entity based on the relationship type and/or confidence degree between the M candidate second-type-entity and the target first-type-entity includes:
sequencing the M candidate second-type-entity based on a priority order of the relationship type to obtain M candidate second-type-entity sequenced based on the relationship type; and in a case that a plurality of M candidate second-type-entities are obtained after being sequenced based on the relationship type and a plurality of candidate second-type-entities corresponding to a same relationship type exist in the plurality of M candidate second-type-entities sequenced based on the relationship type, sequencing the plurality of candidate second-type-entities corresponding to the same relationship type based on the confidence degree.

The priority order of the relationship types can be set according to actual conditions, such as responsible relationship, participating relationship and interfacing relationship; of course, it may also be responsible relationship, participating relationship, cooperative relationship, etc., which is not exhaustive here.

The candidate second-type-entities are sequenced based on priorities of relationship types. After sequencing, there may be one or more candidate second-type-entities with the same relationship type.

In a case that there is one candidate second-type-entity under a same one relationship type, the candidate second-type-entity with this relationship type may not be further processed.

In a case that there are two or more candidate second-type-entities under a same one relationship type, sequencing is further performed in combination with the confidence degrees of the two or more candidate second-type-entities.

Finally, the sequencing result of all candidate second-type-entities can be obtained, and the top N of the candidate second-type-entities are selected as final target second-type-entities, namely, the search result.

The value of N may be 10, may be 5, and is not exhaustive.

For example, M = 10 and N = 3, the priority order of the relationship types is responsible relationship, participating relationship and cooperative relationship. After sequencing based on the priority order of the relationship types, there is 1 candidate second-type-entity with the relationship type of responsible relationship, there are 7 candidate second-type-entities with the relationship type of participating relationship, and there are 2 candidate second-type-entities with the relationship type of cooperative relationship. The one candidate second-type-entity with the relationship type of responsible relationship is ranked as the first and will not be further processed. The 7 candidate second-type-entities with the relationship type of participating relationship are sequenced based on the confidence degrees from large to small, to obtain a sequence of the 7 candidate second-type-entities. The 2 candidate second-type-entities with the relationship type of cooperative relationship are sequenced based on the confidence degrees from large to small, to obtain a sequence of the 2 candidate second-type-entities. And finally, the top three candidate second-type-entities are selected from the 10 candidate second-type-entities as target second-type-entities, which may include the candidate second-type-entity with the relationship type of responsible relationship, and top two candidate second-type-entities in confidence degree sequence from the 7 candidate second-type-entities with the relationship type of participating relationship.

It is to be noted that since attribute information (or related information) corresponding to each entity is preset in the relational map, attribute information of each target second-type-entity in the N target second-type-entities can be included in the finally obtained search result.

In this embodiment, the second-type-entity may be a human entity in particular, and the first-type-entity may be an event entity in particular. The first-type-entity may be a project, a platform, a department, etc.; the second-type-entity, i.e., a human entity, may be a clerk or employee, wherein itself or attribute information thereof may include a person's name, post, job grade, etc. In addition, the first-type-entity and the second-type-entity have a relationship, namely, there is a relationship between a human entity and an event entity. The relationship between the second-type-entity and the first-type-entity may be responsible relationship, cooperative relationship, participating relationship, etc., which is not intended to be exhaustive.

The technical solution provided by the present embodiment is exemplarily illustrated by taking a target first-type-entity as project A in an enterprise and a second-type-entity as an employee in the enterprise as an example.

A search word related to the project A is input, such as the name of the project A. Searching is performed to obtain K related employees based on the search word and the relational map, wherein K is assumed to be 20. M candidate employees are selected from the K related employees according to the data representing the relations between the K related employees and the project A (M can be different according to actual conditions and is assumed to be 10). For example, the data representing the relations between 10 related employees and the project A may include: employee 1 and employee 2 are person in charge, wherein the employee 1 was the person in charge 1 month ago, the employee 2 is current person in charge; employee 3, employee 4, employee 5, employee 6 and employee 7 are participants of project A; employee 8, employee 9, and employee 10 are cooperators of project A. The relationship type condition may be reserving person in charge and participants, and thus employees 8, 9, and 10 can be removed to retain employees 1-7.

The M candidate employees are sequenced, the top N candidate employees are selected from the M candidate employees as target employees, and the N target employees are taken as the current search result. Here, N can be set according to actual situations, such as 3, that is, 3 target employees are finally obtained as the search result. The search result may include N target employees and at least one of name, contact information, responsibility and other attribute information of each target employee.

Therefore, the candidate second-type-entities can be sequenced preferentially based on the relationship type, and candidate second-type-entities with the same relationship type are sequenced according to the confidence degree, so that the relationship type is used as the most important basis for searching and finding, the problem of sequencing standard in the case of the same relationship type is solved, the situation of random sequencing in the case of the same relationship type is avoided, and the accuracy and reliability of information searching can be improved.

In another embodiment of the present invention, the method further includes:
determining a correctness proportion of the N target second-type-entity contained in the search result, taking the correctness proportion as an evaluation result; and optimizing at least one of the confidence condition, the relationship type condition and the preset time condition based on the evaluation result.

After performing the above steps S101-S103, at least one of the confidence condition, the relationship type condition, and the preset time condition may be evaluated and improved by calculating a correctness proportion of a search result. Different correctness proportions of the search results can correspond to different evaluation indexes, and the evaluation indexes may include accuracy rate, availability rate and bad rate. The specific corresponding mode can be as follows: the accuracy rate refers to the proportion that corresponding search results under each search are all correct; the availability rate refers to the proportion that more than half of corresponding search results under each search are correct; the bad rate refers to the proportion that not more than half of corresponding search results under each search are correct.

The manner to determine the evaluation index may be feedback after the user uses the search, and may also be correction performed after other people check the data.

The specific numerical values of the accuracy rate, the availability rate and the bad rate are the above evaluation results. After the evaluation result is obtained, at least one of confidence condition, relationship type condition and preset time condition can be optimized. For example, when the accuracy rate of the acquired data results is high while the bad rate is not 0, the reason may be that the confidence condition is set too high, resulting in the inclusion of abnormal statistical results. The abnormal statistical results can be eliminated by reducing the confidence condition, so that the bad rate is reduced to 0, and the accuracy rate is guaranteed to be continuously maintained at a higher level.

Therefore, the search effect under the current condition can be evaluated based on search result indexes such as accuracy rate, availability rate, bad rate and the like. Furthermore, the search method can be improved according to the evaluation effect, so that the problem that the search method is continuously and iteratively upgraded is solved.

According to another aspect of the present disclosure, an information searching apparatus is provided, as shown in Fig. 4, including:
an extraction module 401 configured for acquiring K related second-type-entity corresponding to a target first-type-entity from a relational map based on a search word related to the target first-type-entity; wherein K is an integer greater than or equal to 1;
a filtering module 402 configured for selecting M candidate second-type-entity from the K related second-type-entity based on data representing a relation between the K related second-type-entity and the target first-type-entity; wherein M is an integer greater than or equal to 1 and less than or equal to K;
a search result determination module 403 configured for selecting N target second-type-entity from the M candidate second-type-entity as a search result; wherein N is an integer greater than or equal to 1 and less than or equal to M.

The filtering module 402 is configured for acquiring, based on a confidence degree between the K related second-type-entity and the target first-type-entity, a related second-type-entity meeting a confidence condition from the K related second-type-entity, adding the related second-type-entity meeting the confidence condition to a candidate set; and determining the M candidate second-type-entity based on the candidate set.

The filtering module 402 is configured for filtering the related second-type-entity contained in the candidate set based on at least one of a relationship type condition and a preset time condition to obtain a related second-type-entity remaining in the candidate set as the M candidate second-type-entity.

The search result determination module 403 is configured for sequencing the M candidate second-type-entity based on a relationship type and/or a confidence degree between the M candidate second-type-entity and the target first-type-entity to obtain a sequencing result of the M candidate second-type-entity; and selecting top N candidate second-type-entity in sequence as the N target second-type-entity based on the sequencing result of the M candidate second-type-entity, and taking the N target second-type-entity as the search result.

The search result determination module 403 is configured for sequencing the M candidate second-type-entity based on a priority order of the relationship type to obtain M candidate second-type-entity sequenced based on the relationship type; and in a case that a plurality of M candidate second-type-entities are obtained after being sequenced based on the relationship type and a plurality of candidate second-type-entities corresponding to a same relationship type exist in the plurality of M candidate second-type-entities sequenced based on the relationship type, sequencing the plurality of candidate second-type-entities corresponding to the same relationship type based on the confidence degree.

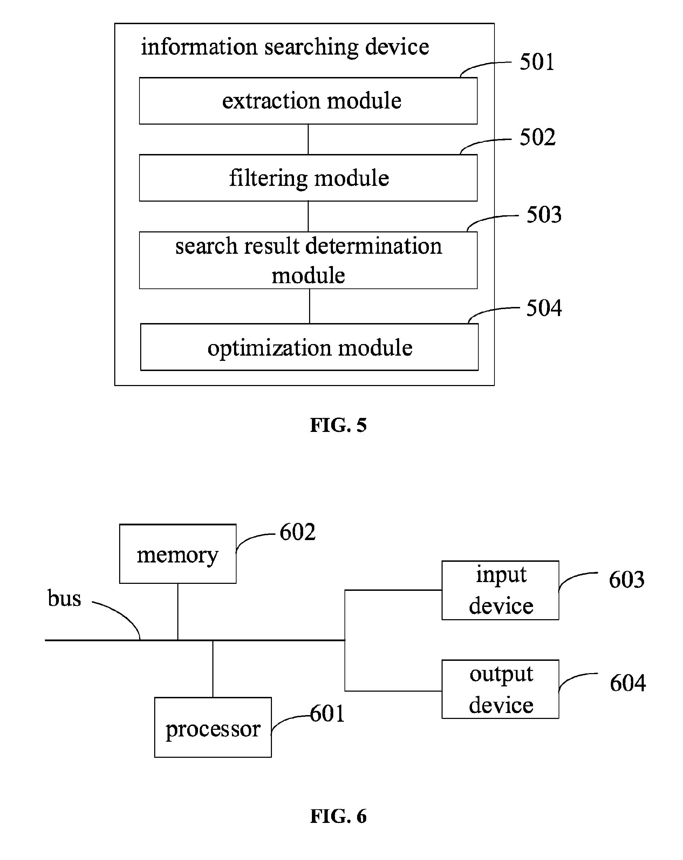

According to another embodiment of the invention, as shown in Fig. 5, the apparatus includes an extraction module 501, a filtering module 502, a search result determination module 503, and further includes:

an optimization module 504 configured for determining a correctness proportion of the N target second-type-entity contained in the search result, taking the correctness proportion as an evaluation result; and optimizing at least one of the confidence condition, the relationship type condition and the preset time condition based on the evaluation result.

Exemplary, the extraction module 501, the filtering module 502, and the search result determination module 503 of Fig. 5 are respectively identical or similar to the extraction module 401, the filtering module 402, and the search result determination module 403 of Fig. 4.

In accordance with embodiments of the present disclosure, the present disclosure also provides an electronic device and a readable storage medium.

As shown in Fig. 6, a block diagram of an electronic device used to implement the information search method of an embodiment of the present disclosure is illustrated. The electronic device is intended to represent various forms of digital computers, such as laptop computers, desktop computers, work tables, personal digital assistants, servers, blade servers, mainframe computers, and other suitable computers. The electronic device may also represent various forms of mobile devices, such as personal digital processors, cellular telephones, smart phones, wearable devices, and other similar computing devices. The components, connections, relationships, and functions thereof shown herein are by way of example only and are not intended to limit the implementations of the present disclosure described and/or claimed herein.

As shown in Fig. 6, the electronic device includes: one or more processors 601, memory 602, and interfaces for connecting components, including high-speed interfaces and low-speed interfaces. The various components are interconnected by utilizing different buses and may be mounted on a common mainboard or otherwise as desired. The processor may process instructions for execution within the electronic device, including instructions stored in or on a memory to display graphical information of the GUI on an external input/output device (such as a display device coupled to the interface). In other embodiments, multiple processors and/or multiple buses may be used with multiple memories, if desired. Also, multiple electronic devices may be connected, each providing some of the necessary operations (e.g., as an array of servers, a set of blade servers, or a multi-processor system). An example of one processor 601 is shown in Fig. 6.

The memory 602 is a non-transitory computer-readable storage medium provided in the present disclosure. The memory stores instructions executable by at least one processor to cause the at least one processor to perform the information searching method provided in the present disclosure. The non-transitory computer-readable storage medium of the present disclosure stores computer instructions for causing a computer to perform the information searching method provided herein.

The memory 602, as a non-transitory computer-readable storage medium, may be used to store non-transitory software programs, non-transitory computer-executable programs, and modules, such as program instructions/modules corresponding to the information searching method in embodiments of the present disclosure (e.g., extraction module, filtering module, search result determination module and optimization module shown in Fig. 5). The processor 601 performs various functional applications of the server and data processing by executing non-transient software programs, instructions, and modules stored in the memory 602, to implement the information searching method in the above-described method embodiment.

The memory 602 may include a program storage area and a data storage area, wherein the program storage area may store an operating system, an application program required for at least one function. The data storage area may store data created according to the use of the electronic device for information search, etc. In addition, the memory 602 may include high-speed random access memory, and may also include a non-transitory memory, such as at least one disk storage device, flash memory device, or other non-transitory solid state storage device. In some embodiments, the memory 602 may optionally include a memory remotely located relative to the processor 601, which may be connected via a network to the electronic device for information search. Examples of such networks include, but are not limited to, the Internet, intranets, local area networks, mobile communication networks, and combinations thereof.

The electronic device for information search may further include: an input device 603 and an output device 604. The processor 601, memory 602, input device 603, and output device 604 may be connected by a bus or other means, exemplified by a bus connection in Fig. 6.

The input device 603 may receive input numeric or character information and generate key signal inputs related to user settings and functional controls of a user's electronic device, for example, a touch screen, a keypad, a mouse, a trackpad, a touchpad, an indicating arm, one or more mouse buttons, a trackball, a joystick and other input devices. The output device 604 may include a display device, an auxiliary lighting device (e.g., LEDs), a touch feedback device (e.g., vibration motors), etc. The display device may include, but is not limited to, a liquid crystal display (LCD), a light emitting diode (LED) display, and a plasma display. In some embodiments, the display device may be a touch screen.

Various embodiments of the systems and techniques described herein may be implemented in digital electronic circuitry system, integrated circuit system, ASIC (application-specific integrated circuit), computer hardware, firmware, software, and/or combinations thereof. These various embodiments may include: embodied in one or more computer programs, which can be executed and/or interpreted on a programmable system including at least one programmable processor, the programmable processor can be a dedicated or general-purpose programmable processor and can receive data and instructions from, and can transmit data and instructions to, a memory system, at least one input device, and at least one output device.

These computing programs (also referred to as programs, software, software applications, or code) include machine instructions of a programmable processor, and may be implemented by utilizing high-level procedural and/or object-oriented programming languages, and/or assembly/machine languages. As used herein, the terms "machine-readable medium" and "computer-readable medium" refer to any computer program products, devices, and/or apparatus (e.g., a magnetic disk, an optical disk, a memory, a programmable logic device (PLD)) for providing machine instructions and/or data to a programmable processor, including a machine-readable medium that receives machine instructions as machine-readable signals. The term "machine-readable signal" refers to any signal used to provide machine instructions and/or data to a programmable processor.

To provide interaction with a user, the systems and techniques described herein may be implemented on a computer having: a display device (e.g., a CRT (cathode ray tube) or LCD (liquid crystal displayer) monitor) for displaying information to a user; and a keyboard and a pointing device (e.g., a mouse or a trackball) through which a user can provide input to the computer. Other types of devices may also be used to provide interaction with a user. For example, the feedback provided to the user may be any form of sensory feedback (e.g., visual feedback, auditory feedback, or touch feedback); and input from the user may be received in any form, including acoustic input, voice input, or touch input.

The systems and techniques described herein may be implemented in a computing system that includes a background component (e.g., as a data server), or a computing system that includes a middleware component (e.g., an application server), or a computing system that includes a front-end component (e.g., a user computer having a graphical user interface or a web browser through which a user may interact with embodiments of the systems and techniques described herein), or in a computing system that includes any combination of such background components, middleware components, or front-end components. The components of the system may be interconnected by digital data communication in any form or medium (e.g., a communication network). Examples of communication networks include: local area networks (LAN), wide area networks (WAN), and the Internet.

The computer system may include a client and a server. The client and the server are typically remote from each other and typically interact through a communication network. The relationship between the client and the server is generated by a computer program running on a respective computer and having a client-server relationship. The server can be a cloud server, also called a cloud computing server or a cloud host, which is a host product in a cloud computing service system, and solves the defects of high management difficulty and weak business expansibility in the service of the traditional physical host and virtual private server (VPS). The server may also be a server of a distributed system, or a server in combination with blockchain.

According to the technical solution of the embodiment of the present disclosure, the related second-type-entities corresponding to the target first-type-entity can be determined through the relational map, the candidate second-type-entities are screened from the related second-type-entities, and finally the target second-type-entity is determined from the candidate second-type-entities to serve as the search result. Therefore, by determining the target second-type-entity related to the target first-type-entity through the relational map, the problems of low efficiency, deviation of results and the like caused by offline inquiry and the like can be avoided. In the technical solution provided in this embodiment, the target second-type-entity can be determined only through the pre-constructed relational map and the related search word, the searching efficiency and the accuracy are substantially improved, and the office efficiency of enterprises can be improved.

It should be understood that the above various processes can be used, and steps may be reordered or omitted, or other steps may be added therein. For example, the steps described in the present disclosure may be performed in parallel or sequentially or may be performed in a different order, so long as the desired result of the technical solutions disclosed in the present disclosure can be achieved, and no limitation is made herein.

Above specific embodiments do not constitute a limitation on the protection scope of the present disclosure. It should be understood by those skilled in the art that various modifications, combinations, sub-combinations, and substitutions may be available according to design requirements and other factors. Any modifications, equivalent replacements and improvements made within the spirit and principle of the present disclosure shall be covered within the protection scope of the present disclosure.

## Claims

1. An information searching method, comprising:
acquiring (S101) K related second-type-entity corresponding to a target first-type-entity from a relational map based on a search word related to the target first-type-entity; wherein K is an integer greater than or equal to 1;
selecting (S102) M candidate second-type-entity from the K related second-type-entity based on data representing a relation between the K related second-type-entity and the target first-type-entity; wherein M is an integer greater than or equal to 1 and less than or equal to K; and
selecting (S103) N target second-type-entity from the M candidate second-type-entity as a search result; wherein N is an integer greater than or equal to 1 and less than or equal to M.

2. The information searching method of claim 1, wherein selecting (S102) the M candidate second-type-entity from the K related second-type-entity based on the data representing the relation between the K related second-type-entity and the target first-type-entity comprises:
acquiring, based on a confidence degree between the K related second-type-entity and the target first-type-entity, a related second-type-entity meeting a confidence condition from the K related second-type-entity, adding the related second-type-entity meeting the confidence condition to a candidate set; and determining the M candidate second-type-entity based on the candidate set.

3. The information searching method of claim 2, wherein determining the M candidate second-type-entity based on the candidate set comprises:
filtering the related second-type-entity contained in the candidate set based on at least one of a relationship type condition and a preset time condition to obtain the M candidate second-type-entity.

4. The information searching method of any one of claims 1-3, wherein selecting (S103) the N target second-type-entity from the M candidate second-type-entity as the search result comprises:
sequencing (S301) the M candidate second-type-entity based on a relationship type and/or a confidence degree between the M candidate second-type-entity and the target first-type-entity to obtain a sequencing result of the M candidate second-type-entity; and
selecting (S302) top N candidate second-type-entity in sequence as the N target second-type-entity based on the sequencing result of the M candidate second-type-entity, and taking the N target second-type-entity as the search result.

5. The information searching method of claim 4, wherein sequencing (S301) the M candidate second-type-entity based on the relationship type and/or the confidence degree between the M candidate second-type-entity and the target first-type-entity comprises:
sequencing the M candidate second-type-entity based on a priority order of the relationship type to obtain M candidate second-type-entity sequenced based on the relationship type; and
in a case that a plurality of M candidate second-type-entities are obtained after being sequenced based on the relationship type and a plurality of candidate second-type-entities corresponding to a same relationship type exist in the plurality of M candidate second-type-entities sequenced based on the relationship type, sequencing the plurality of candidate second-type-entities corresponding to the same relationship type based on the confidence degree.

6. The information searching method of any one of claims 3-5, further comprising:
determining a correctness proportion of the N target second-type-entity contained in the search result, taking the correctness proportion as an evaluation result; and optimizing at least one of the confidence condition, the relationship type condition and the preset time condition based on the evaluation result.

7. An information searching apparatus, comprising:
an extraction module (401, 501) configured for acquiring K related second-type-entity corresponding to a target first-type-entity from a relational map based on a search word related to the target first-type-entity; wherein K is an integer greater than or equal to 1;
a filtering module (402, 502) configured for selecting M candidate second-type-entity from the K related second-type-entity based on data representing a relation between the K related second-type-entity and the target first-type-entity; wherein M is an integer greater than or equal to 1 and less than or equal to K;
a search result determination module (403, 503) configured for selecting N target second-type-entity from the M candidate second-type-entity as a search result; wherein N is an integer greater than or equal to 1 and less than or equal to M.

8. The information searching apparatus of claim 7, wherein the filtering module (402, 502) is configured for acquiring, based on a confidence degree between the K related second-type-entity and the target first-type-entity, a related second-type-entity meeting a confidence condition from the K related second-type-entity, adding the related second-type-entity meeting the confidence condition to a candidate set; and determining the M candidate second-type-entity based on the candidate set.

9. The information searching apparatus of claim 8, wherein the filtering module (402, 502) is configured for filtering the related second-type-entity contained in the candidate set based on at least one of a relationship type condition and a preset time condition to obtain the M candidate second-type-entity.

10. The information searching apparatus of any one of claims 7-9, wherein the search result determination module (403, 503) is configured for sequencing the M candidate second-type-entity based on a relationship type and/or a confidence degree between the M candidate second-type-entity and the target first-type-entity to obtain a sequencing result of the M candidate second-type-entity; and selecting top N candidate second-type-entity in sequence as the N target second-type-entity based on the sequencing result of the M candidate second-type-entity, and taking the N target second-type-entity as the search result.

11. The information searching apparatus of claim 10, wherein the search result determination module (403, 503) is configured for sequencing the M candidate second-type-entity based on a priority order of the relationship type to obtain M candidate second-type-entity sequenced based on the relationship type; and in a case that a plurality of M candidate second-type-entities are obtained after being sequenced based on the relationship type and a plurality of candidate second-type-entities corresponding to a same relationship type exist in the plurality of M candidate second-type-entities sequenced based on the relationship type, sequencing the plurality of candidate second-type-entities corresponding to the same relationship type based on the confidence degree.

12. The information searching apparatus of any one of claims 9-11, further comprising:
an optimization module (504) configured for determining a correctness proportion of the N target second-type-entity contained in the search result, taking the correctness proportion as an evaluation result; and optimizing at least one of the confidence condition, the relationship type condition and the preset time condition based on the evaluation result.

13. A non-transitory computer-readable storage medium storing computer instructions, the computer instructions are executed by a computer to enable the computer to perform the information searching method of any one of claims 1-6.

14. A computer program product comprising a computer program, the computer program is executed by a processor to enable the processor to perform the information searching method of any one of claims 1-6.
